# FASCICULE DE BREVET EUROPEEN

(11) **EP 3 082 458 B1**
(45) Date de publication et mention de la délivrance du brevet: **18.04.2018**
(21) Numéro de dépôt: 14821805.0
(22) Date de dépôt: 08.12.2014
(51) Int. Cl.: A23B 4/01, A23B 4/06, A23B 4/16, B65B 31/00, B65B 55/14, B65B 63/08, B65D 81/20, A23L 13/00

(54) **PALETS DE VIANDES SURGELES**
GEFRIERFLEISCHPASTETEN
FROZEN MEAT PATTIES

(30) Priorité: 06.12.2013 FR 1302868
(43) Date de publication de la demande: 26.10.2016
(73) Titulaire: YOOJI, 33600 Pessac (FR)
(72) Inventeur: MATHEY, Rémi, F-47000 Agen (FR); VENTRE, Frédéric, F-33560 Sainte Eulalie (FR); VIGNOLLE, Marc, F-91940 Les Ulis (FR)
(74) Mandataire: IP Trust
(86) Numéro de dépôt international: PCT/FR2014/053209
(87) Numéro de publication internationale: WO 2015/082864

(56) Documents cités:
- EP-A1- 1 917 866
- FR-A1- 2 591 437
- US-B1- 6 676 986
- Anonymous: "Comment préparer et conserver la viande pour bébé ?", , 21 mai 2013 (2013-05-21), XP055143082, Extrait de l'Internet: URL:http://mamanletuto.com/preparer-viande -bebe/ [extrait le 2014-09-26]
- DATABASE GNPD [Online] MINTEL; janvier 2010 (2010-01), anonymous: "Chicken & Vegetables Baby food", XP002730323, Database accession no. 1236553
- DATABASE GNPD [Online] MINTEL; août 2010 (2010-08), anonymous: "Beef & Veggies Meatloaf Junio Meals", XP002730324, Database accession no. 1387536
- anonymous: "Babycubes 2080 contenants alimentaires pour bébé 8*40 ml", , 21 mars 2011 (2011-03-21), XP002730325, Extrait de l'Internet: URL:http://www.amazon.fr/Babycubes-2080-Co ntenants-alimentaires-pour/dp/B001B5DTO2/r ef=pd_sim_by_9?ie=UTF8&refRID=0NNAR08DC7T4 6FQRVJM4 [extrait le 2014-09-26]
- * Le Meilleur De: "Qualité et choix exceptionnels pour satisfaire les plus fins gourmets. Simple, constante et avantageuse", , 30 novembre 2010 (2010-11-30), XP055173605, Extrait de l'Internet: URL:http://www.multivac.fr/fileadmin/multi vac/fr/pdf/download/multivac-cuissons-sous -vide.pdf [extrait le 2015-03-04]
- Douglas Baldwin: "Guide pratique de la cuisson sous vide", , 20 avril 2009 (2009-04-20), XP055173608, Extrait de l'Internet: URL:http://addelice.com/docs/html/guide_so us_vide.html [extrait le 2015-03-04]

## Description

### Domaine technique de l'invention

Le domaine de l'invention est le domaine des aliments pour les bébés (moins de 36 mois), les personnes âgées et des personnes à risques : personnes souffrant de pathologies diverses entraînant des difficultés à mâcher ou à déglutir, ou ayant subi des interventions chirurgicales les obligeant à privilégier une alimentation liquide ou pâteuse (exemples : gastrectomie, gastroplastie).

L'invention est telle que définie dans les revendications.

### Etat de la technique antérieure faisant ressortir le problème posé

L'objectif de l'invention est de fournir une alimentation nutritionnellement équilibrée, simple, saine et avec un bon goût pour les bébés, les personnes âgées et des personnes à risques.

Les produits proposés actuellement sont le plus souvent :
- des plats composés dits complets mélangeant légumes, féculents et protéines
- le broyage à domicile de morceaux de viandes, prélevés par exemple sur un steak entier, après cuisson.

Les produits industriels existants (technologie de la conserve stérile) sont équilibrés mais ont un gout décevant et lorsque leur contenant a été ouvert (petit pot, assiette, barquette, sachet, bol...), leur contenu doit être consommé rapidement.

Les produits faits maison ont un bon goût mais ils présentent divers inconvénients :
- la quantité prélevée, qui peut être de l'ordre de 10 g, est peu précise ;
- la quantité prélevée est petite par rapport à la quantité totale d'aliment qu'il a fallu cuire, ce qui engendre des restes et donc du gaspillage
- il y a un risque de présence de morceaux d'os ou d'arêtes de poisson dans la quantité prélevée, tant avant qu'après broyage.

EP1917866 décrit par exemple un procédé d'obtention de palets de viande hachée surgelés.

### Exposé de l'invention

L'invention concerne un procédé de préparation d'aliments à base de viandes présentant une teneur en chair de viande égale ou supérieure à 95% et sans ajout de sel, de matière grasse ou de tout liant additionnels, caractérisé en ce qu'il comprend les étapes successives suivantes :
- étape 1 : un premier traitement thermique de cuisson sous vide, dans un emballage en atmosphère saturée d'humidité, est appliqué auxdits aliments,
- étape 1.1 : les aliments ayant subi le premier traitement thermique de cuisson sous vide sont fractionnés pour former des éléments de taille inférieure à deux millimètres se présentant à l'état pâteux
- étape 2 : les aliments se présentant à l'état pâteux sont reconditionnés dans différentes alvéoles d'un contenant, emballées individuellement, sous vide partiel ou total, afin de subir un deuxième traitement thermique de pasteurisation en atmosphère saturée en humidité,
- étape 3 : les aliments ayant subi le deuxième traitement thermique de pasteurisation dans les portions individuelles, sont refroidis rapidement et surgelés jusqu'à -18°C dans les alvéoles individuelles du contenant.
Selon une autre caractéristique, le premier traitement thermique de cuisson de l'étape 1 est effectué dans une cellule de cuisson, à une température ambiante de 60 à 95°C pendant 30 à 60 minutes de manière à viser une température à coeur des aliments d'environ 60 à 95°C.
Selon encore une autre caractéristique, le deuxième traitement thermique de pasteurisation de l'étape 2 est effectué dans une cellule de cuisson à une température ambiante de 60 à 95°C pendant 15 à 30 minutes environ, de manière à viser une pasteurisation suffisante pour la conservation du produit.
L'invention concerne également un conditionnement d'aliments à base de viandes, comprenant un contenant pourvu de différentes alvéoles contenant chacune des aliments présentant une teneur en chair de viande égale ou supérieure à 95% et sans ajout de sel, emballés individuellement, sous vide partiel ou total, cuits, pasteurisés et surgelés selon le procédé ci-dessus.

Les aliments selon l'invention sont ainsi à base de viandes, cuits, hachés, emballés et surgelés.

Les aliments selon l'invention sont hachés très finement. Ce hachage fin facilite leur consommation par des bébés ou des personnes âgées ou à risques.

Selon une autre caractéristique de l'invention, ces aliments à base de viandes cuits, hachés, emballés et surgelés sont conditionnés en plusieurs portions de quantités définies. Il est ainsi facile de prélever une quantité précise de l'aliment.

Les portions peuvent être conditionnées sous des formes variées :
- en vrac, emballées individuellement ou non, dans un contenant ;
- dans un contenant du type « barquette », qui comprend plusieurs portions emballées individuellement, avec la possibilité de prendre une ou plusieurs portions, sans ouvrir l'emballage des autres portions.

Quand la portion est emballée individuellement, l'emballage peut être réalisé sous vide, total ou partiel.

Selon une autre caractéristique de l'invention, les aliments ont une consistance « cohésif-fragile ». Cette consistance permet d'utiliser les aliments en leur donnant au moment de la mise en oeuvre, des tailles différentes adaptées au consommateur : morceaux, petits fragments ou fines miettes.

Selon une autre caractéristique de l'invention, la proportion de viandes dans le produit fini est égale ou supérieure à 95 %.

L'invention porte également sur un procédé de préparation d'aliments à base de viandes, qui comporte deux étapes principales :
- étape 1 : les aliments sont cuits et fractionnés
- étape 2 : les aliments sont ré-agglomérés et pasteurisés Pendant l'étape 1, la cuisson et le fractionnement sont successifs.

Pendant l'étape 2, la ré-agglomération et la pasteurisation peuvent être simultanées ou successives.

Dans le cas où la ré-agglomération et la pasteurisation sont effectuées simultanément, la pasteurisation peut être effectuée sous vide, total ou partiel, dans l'emballage définitif.

### Brève présentation des figures

La figure 1 montre un emballage multi-portions sous vide en vue de dessus.
La figure 2 montre le même emballage en vue de face.

### Définitions des termes utilisés

- Viandes : Chair de boeuf, de veau, de porc, d'agneau, de poulet, d'autres volailles... et chair de poisson.
- Consistance « cohésif-fragile » : Etat du produit permettant au choix de l'utilisateur et au moment de la mise en oeuvre de le couper en morceaux, ou de le réduire en petits fragments ou en fines miettes.
- Contenant du type « barquette » : Emballage regroupant des portions.
- Bébés : Nourrissons et très jeunes enfants de moins de 36 mois.
- Personnes à risques : Personnes souffrant de troubles ou de pathologies diverses, pas forcément chroniques, entraînant des difficultés à mâcher ou à déglutir, ou ayant subi des interventions chirurgicales les obligeant à privilégier une alimentation liquide ou pâteuse (exemples : gastrectomie, gastroplastie)

### Exposé détaillé d'au moins un mode de réalisation

Les aliments selon l'invention se caractérisent par la très grande finesse de leur hachage, ce qui favorise une meilleure ingestion par les bébés, les personnes âgées et des personnes à risques. La taille des éléments qui constituent ces aliments est inférieure à deux millimètres et, de manière préférentielle inférieure à un millimètre.

Autre caractéristique de l'invention : les aliments ont une consistance « cohésif-fragile », ce qui permet de les fractionner facilement et sans effort avec les ustensiles courants de la table (fourchette, couteau et dos de la cuillère) en morceaux de quelques millimètres à quelques dixièmes de millimètres. Les aliments sont ainsi facilement adaptés, par la personne qui prépare le repas, à la capacité de mastication, de déglutition et de digestion des différents consommateurs.

Cette consistance « cohésif-fragile » présente des similitudes avec la consistance des biscottes, que l'on peut facilement fractionner sous la forme de morceaux, de petits fragments ou de fines miettes.

Les aliments sont composés, de manière préférentielle, à plus de 95% par des viandes, et sans ajout de sel. Cette composition permet d'avoir des aliments homogènes et nutritionnellement et diététiquement intéressants. Leur réchauffage possible au four à micro-ondes en fait des aliments simples d'usage.

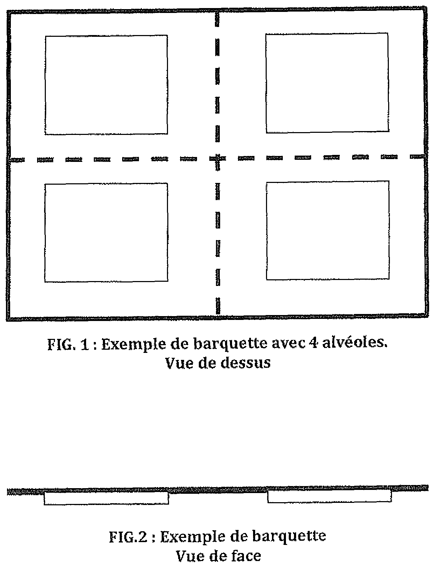

Les aliments sont de préférence emballés dans un contenant multi-alvéoles contenant chacune une portion. Un contenant de ce type, appelé « barquette » est présenté sur les figures 1 et 2. Chaque portion mise sous vide est isolée des autres par une soudure des matériaux d'emballage entre eux. L'ensemble fait l'objet d'une pasteurisation sous vide partiel ou total. Ainsi à l'usage, chaque portion peut être individualisée, ce qui permet d'adapter la quantité consommée à l'âge et à l'appétit du consommateur.

Les aliments peuvent être opportunément mélangés après réchauffage et fractionnement à des purées de légumes et féculents pour constituer un plat complet.

La pasteurisation sous vide partiel ou total apporte aux aliments la sécurité sanitaire nécessaire.

Dans une variante, les aliments peuvent faire l'objet d'un conditionnement plus sommaire. Les aliments sont, par exemple, nus dans l'emballage.

Le procédé de fabrication des aliments se déroule en deux phases :
- Une première phase consiste en une cuisson et un fractionnement des viandes. Les deux opérations peuvent être simultanées ou successives.
- Une deuxième phase consiste en une ré-agglomération et une pasteurisation des aliments. Ces deux opérations peuvent être simultanées ou successives.

Cette fabrication en deux phases contribue à donner aux produits les propriétés sanitaires et d'usage recherchées.

La matière (boeuf, veau, porc, poulet, dinde, canard, et autres volailles et poissons) à l'état congelée fait l'objet d'une décongélation suivie d'un premier traitement thermique, sous vide dans un emballage, en atmosphère saturée d'humidité, dans une cellule de cuisson, à une température ambiante de 60 à 95°C pendant 30 à 60 minutes de manière à viser une température à coeur d'environ 60 à 95°C. Si la matière est à l'état frais ou non congelé, la phase de décongélation est inutile.

Après refroidissement, la matière est réduite en une fine pâte (ex. par broyage ou cutterage intensif).

Cette matière à l'état pâteux est reconditionnée (ex. par palet de 10g) dans des barquettes en plastique, sous vide partiel ou total, et operculée afin de subir un deuxième traitement thermique en atmosphère saturée en humidité, dans la cellule de cuisson à une température ambiante de 60 à 95°C pendant 15 à 30 minutes environ, de manière à viser une pasteurisation suffisante pour la conservation du produit. La barquette regroupe par ex. 4 portions de 10g.

Des alternatives de procédés sont possibles :
- Par ex. on peut remplacer le premier traitement thermique dans l'emballage par une décongélation et cuisson dans une baratte sous vide partiel ou non.
- Par ex. on peut remplacer le premier traitement thermique dans l'emballage par une décongélation et cuisson plus ou moins simultanément avec le cutterage dans un cutter chauffant sous vide ou non.

L'aliment est ensuite refroidi rapidement et surgelé jusqu'à -18°C dans cette même barquette.
Le procédé selon l'invention permet la fabrication d'aliments à teneur élevée voire très élevée en viande (égale ou supérieure à 95% et donc notamment 100% de viande), ainsi sans ajout de sel, de matière grasse et/ou de tout liant additionnels (c'est-à-dire extérieurs à ceux naturellement présents dans la viande) type crème, saumure ou autre liant, et qui pour autant se présentera sous une forme compacte lorsque congelé, et bénéficiera, lorsque décongelé, d'une capacité à s'émietter en petits morceaux de quelques millimètres voire un millimètre.
L'aliment conditionné selon l'invention présente ainsi l'avantage de ne contenir aucun liant ni matière grasse additionnels ou extérieurs à ceux naturellement présents dans les viandes, tout en présentant une compacité et une cohésion élevés lorsque congelé, et en étant conditionnés sous vide dans des portions individuelles après des traitements thermiques sous vide ayant empêché l'évaporation de l'eau des viandes de base, ayant garanti la conservation dans ces viandes de l'exsudat formé lors de la cuisson, et limité la formation de composés microbiologiques indésirables et ainsi le rancissement des matières grasses lors de la conservation congelée de l'aliment.
A cet effet, le procédé selon l'invention consiste principalement à :
1) appliquer à des aliments présentant une teneur en chair de viande égale ou supérieure à 95%, la teneur en viande pouvant ainsi atteindre les 100%, un premier traitement thermique visant à les cuire dans un emballage (type sachet plastique d'une contenance de par exemple deux ou trois litres) sous vide et en atmosphère saturée d'humidité.
   La cuisson dans un emballage, sous vide et dans une atmosphère saturée d'humidité permet d'éviter une évaporation de l'eau contenue dans les aliments, d'éviter une évaporation ou toute autre type de perte de l'exsudât formé lors de la cuisson qui reste dans l'emballage et est réabsorbé par les aliments cuits.
   Cette étape est effectuée dans une cellule de cuisson, à une température ambiante de 60 à 95°C pendant 30 à 60 minutes de manière à viser une température à coeur des aliments d'environ 60 à 95°C. Durant une étape subséquente 1.1, les aliments ayant subi le premier traitement thermique de cuisson sous vide ci-dessus sont fractionnés par broyage au hachoir ou cutter de boucher pour former des éléments de taille inférieure à deux millimètres, les rendant faciles à ingérer par des personnes fragiles. Les aliments cuits et broyés ensuite se présentent à l'état pâteux, mais non gélifié.
   Il est en effet important d'avoir haché les viandes une fois que celles-ci ont été cuites, et non alors que celles-ci sont crues, pour éviter la formation d'un gel compact et non friable (type matière de préparation de saucisses) qui ne conviendrait pas à l'objectif de l'invention de proposer un aliment qui s'émiette très facilement une fois décongelé, en éléments de quelques millimètres, sur simple application d'une pression avec le dos de la fourchette par exemple.
2) Selon l'étape suivante, les aliments cuits et se présentant à l'état pâteux mais friable et dépourvus de tout liant ou matière grasse extérieurs à ceux naturellement présents dans la viande, sont reconditionnés dans différentes alvéoles d'un contenant, emballées individuellement, sous vide partiel ou total en atmosphère humide. Cette étape de pasteurisation sous vide et en atmosphère humide garantit à la fois la cohésion et la compacité de la portion de viandes ainsi constituée bien que tout ait été effectué pour éviter la formation d'un gel, améliore l'efficacité de l'échange thermique pour une cuisson à coeur plus rapide, limite le contact des viandes avec l'oxygène et ainsi le rancissement des graisses animales naturellement présentes dans les viandes durant leur conservation congelées, et limite le développement de composés microbiologiques indésirables, et ce, dans les alvéoles de conditionnement définitif du produit, qui sont scellées avant pasteurisation afin de subir un deuxième traitement thermique de pasteurisation en atmosphère saturée en humidité.
   Plus précisément, le deuxième traitement thermique de pasteurisation de l'étape 2 est effectué dans une cellule de cuisson à une température ambiante de 60 à 95°C pendant 15 à 30 minutes environ, de manière à viser une pasteurisation suffisante pour la conservation du produit
3) On refroidit ensuite rapidement dans une cellule de surgélation qui permet de passer rapidement d'une température de 60 à 95°C à une température de -18°C les aliments cuits et pasteurisés dans leurs alvéoles de conditionnement définitif, de façon à les surgeler jusqu'à -18°C.
   Le conditionnement d'aliments à base de viandes obtenu selon ce procédé se présente sous la forme d'un contenant pourvu de différentes alvéoles contenant chacune des aliments présentant une teneur en chair de viande égale ou supérieure à 95% et sans ajout de sel, cuits sous vide, pasteurisés et surgelés sous vide partiel ou total, les alvéoles étant emballées individuellement et scellées. Lorsque la teneur en viandes de l'aliment est comprise entre 95 et 100%, le complément à la viande pourra être constitué par exemple de glucides type farine (de riz, de maïs, de blé, de légumes), notamment issue de l'agriculture biologique et sans matière grasse ajoutée.
   Ces aliments à teneurs très élevée en viande, voire ne contenant que de la viande, sont dépourvus de liant et matière grasse additionnels autres que ceux intrinsèques à la viande ou au poisson constitutif de l'aliment, présentent malgré cette caractéristique, une cohésion élevée lorsque congelés, et une friabilité adéquate lorsque décongelés et sont présentés dans des portions individuelles de poids prédéterminé.
   Un utilisateur désirant utiliser une ou plusieurs portions de cet aliment pour la préparation d'un repas, pourra décongeler les portions désirées, ajouter la matière grasse qu'il souhaite (type huile d'olive) et séparer cet aliment sur simple utilisation de sa fourchette, en éléments de quelques millimètres.

### Application industrielle de l'invention

Production d'aliments pour bébés, pour personnes âgées et pour personnes à risques.

## Revendications

1. Procédé de préparation d'aliments à base de viandes présentant une teneur en chair de viande égale ou supérieure à 95% et sans ajout de sel, de matière grasse ou de tout liant additionnels, **caractérisé en ce qu'**il comprend les étapes successives suivantes :
• étape 1 : un premier traitement thermique de cuisson sous vide, dans un emballage en atmosphère saturée d'humidité, est appliqué auxdits aliments,
• étape 1.1 : les aliments ayant subi le premier traitement thermique de cuisson sous vide sont fractionnés pour former des éléments de taille inférieure à deux millimètres se présentant à l'état pâteux
• étape 2 : les aliments se présentant à l'état pâteux sont reconditionnés dans différentes alvéoles d'un contenant, emballées individuellement, sous vide partiel ou total, afin de subir un deuxième traitement thermique de pasteurisation en atmosphère saturée en humidité,
• étape 3 : les aliments ayant subi le deuxième traitement thermique de pasteurisation dans les portions individuelles, sont refroidis rapidement et surgelés jusqu'à -18°C dans les alvéoles individuelles du contenant.

2. Procédé selon la revendication 1, **caractérisé en ce que** le premier traitement thermique de cuisson de l'étape 1 est effectué dans une cellule de cuisson, à une température ambiante de 60 à 95°C pendant 30 à 60 minutes de manière à viser une température à coeur des aliments d'environ 60 à 95°C.

3. Procédé selon la revendication 1, **caractérisé en ce que** le deuxième traitement thermique de pasteurisation de l'étape 2 est effectué dans une cellule de cuisson à une température ambiante de 60 à 95°C pendant 15 à 30 minutes environ, de manière à viser une pasteurisation suffisante pour la conservation du produit.

4. Conditionnement d'aliments à base de viandes, **caractérisé en ce qu'**il comprend un contenant pourvu de différentes alvéoles contenant chacune des aliments présentant une teneur en chair de viande égale ou supérieure à 95% et sans ajout de sel, emballés individuellement, sous vide partiel ou total, cuits, pasteurisés et surgelés selon le procédé de l'une des revendications 1 à 3.

## Patentansprüche

1. Verfahren zur Zubereitung eines Fleischprodukts mit einem Fleischanteil größer/gleich 95 % ohne Zusatz von Salz, Fett oder Bindemitteln, **dadurch gekennzeichnet, dass** es die folgenden Schritte umfasst:
- Schritt 1: Die besagten Lebensmittel werden einer ersten thermischen Garungsbehandlung unter Vakuum in einer Verpackung in feuchtigkeitsgesättigter Atmosphäre unterzogen.
- Schritt 1.1: Die Lebensmittel, die der ersten thermischen Garungsbehandlung unterzogen wurden, werden in Teile kleiner 2 mm zerteilt, die einen pastösem Zustand haben.
- Schritt 2: Da die Lebensmittel einen pastösen Zustand haben, werden sie in Zellen eines Behältnisses einzeln und ganz oder teilweise unter Vakuum verpackt, und anschließend einer zweiten thermischen Behandlung, der Pasteurisierung, in feuchtigkeitsgesättigter Atmosphäre unterzogen.
- Schritt 3: Die Lebensmittel, die in Einzelportionen der zweiten thermischen Behandlung der Pasteurisierung unterzogen wurden, werden schnell abgekühlt und bei -18 °C in den Einzelzellen des Behältnisses tiefgefroren.

2. Verfahren nach Anspruch 1, **dadurch gekennzeichnet, dass** die erste thermische Garungsbehandlung von Schritt 1 in einer Garungseinheit mit einer Umgebungstemperatur von 60 bis 95 °C 30 bis 60 Minuten lang durchgeführt wird, damit die Lebensmittel im Innern eine Temperatur von 60 bis 95 °C erreichen.

3. Verfahren nach Anspruch 1, **dadurch gekennzeichnet, dass** die zweite thermische Behandlung der Pasteurisierung von Schritt 2 in einer Garungseinheit mit einer Umgebungstemperatur von 60 bis 95 °C 15 bis 30 Minuten lang durchgeführt wird, sodass die Pasteurisierung zur Konservierung des Produkts ausreicht.

4. Verpackung für ein Fleischprodukt, **dadurch gekennzeichnet, dass** sie ein Behältnis mit mehreren Zellen umfasst, die jeweils Lebensmittel mit einem Fleischanteil größer gleich 95 % ohne Zusatz von Salz enthalten, die ganz oder teilweise unter Vakuum in Einzelportionen verpackt und nach dem Verfahren einer der Ansprüche 1 bis 3 gegart, pasteurisiert und tiefgefroren sind.

## Claims

1. A method for preparing meat-based foodstuffs having a meat flesh content equal to or higher than 95% without addition of salt, fat or additional binder, **characterized in that** said method comprises the following successive steps:
• step 1: a first vacuum cooking heat treatment, in a packaging in a moisture saturated atmosphere, is applied to said foodstuffs,
• step 1.1: the foodstuffs having undergone the first vacuum cooking heat treatment are split to form elements having a size of less than two millimetres, in a pasty state
• step 2: the foodstuffs in the pasty state are repackaged in different receptacles of a container, packaged individually, in a partial or total vacuum, in order to undergo a second pasteurization heat treatment in a moisture saturated atmosphere,
• step 3: the foodstuffs having undergone the second pasteurization heat treatment in individual portions are rapidly cooled and frozen to -18°C in the individual receptacles of the container.

2. A method according to claim 1, **characterized in that** the first cooking heat treatment of step 1 is carried out in a cooking unit, at a room temperature ranging from 60 to 95°C for 30 to 60 minutes, so as to reach an internal temperature of the foodstuffs of about 60 to 95°C.

3. A method according to claim 1, **characterized in that** the second pasteurization heat treatment of step 2 is carried out in a cooking unit at a room temperature ranging from 60 to 95°C for about 15 to 30 minutes, so as to reach a pasteurization sufficient for the product preservation.

4. Packaging for meat-based foodstuffs, **characterized in that** it comprises a container provided with various receptacles, each containing foodstuffs having a meat flesh content equal to or higher than 95% and without addition of salt, packaged individually, in a partial or total vacuum, cooked, pasteurized and frozen according to the method of one of claims 1 to 3.
